# EUROPÄISCHE PATENTSCHRIFT

(11) **EP 0 660 482 B1**
(45) Veröffentlichungstag und Bekanntmachung des Hinweises auf die Patenterteilung: **13.03.1996**
(21) Anmeldenummer: 93120667.6
(22) Anmeldetag: 22.12.1993
(51) Int. Cl.: H02G 15/04, H02G 3/06

(54) **Vorrichtung zum abgedichteten Durchführen eines Kabels**
Device for sealed feedthrough of a cable
Dispositif pour la traversée étanche d'un câble

(43) Veröffentlichungstag der Anmeldung: 28.06.1995
(73) Patentinhaber: WIKA ALEXANDER WIEGAND GmbH & CO., D-63911 Klingenberg (DE)
(72) Erfinder: Lohmeier, Franz J., Dr. Dipl.-Phys., D-63897 Miltenberg (DE); Becker, Roman, D-63906 Erlenbach (DE)
(74) Vertreter: Grams, Klaus Dieter, Dipl.-Ing.

(56) Entgegenhaltungen:
- EP-A- 0 525 216
- DE-A- 2 058 148
- DE-A- 3 242 073
- DE-C- 3 519 033
- FR-A- 1 558 098
- FR-A- 2 519 814

## Beschreibung

Die Erfindung bezieht sich auf eine Vorrichtung zum abgedichteten Durchführen eines Endes eines Kabels, das einen Mantel und einen vom Mantel umgebenen Kabelkern aufweist, durch eine Bohrung in einem Wandbauteil. Eine solche Vorrichtung wird im folgenden auch als druckdichte Kabeldurchführung bezeichnet.

Eine druckdichte Kabeldurchführung findet beispielsweise Anwendung bei einem Drucksensor, der als Füllstands- oder Pegelsonde zur Messung von Flüssigkeitsfüllständen in Behältern, Brunnen, offenen Gerinnen oder dergleichen eingesetzt wird. Der in das Medium, beispielsweise Wasser, eingetauchte Drucksensor ist mit dem Kabel verbunden, durch das hindurch die Energieversorgung sowie die Weiterleitung der Meßsignale des Drucksensors erfolgt. Das Kabel verläuft dabei von außen, das heißt aus dem mediumgefüllten Bereich, in das Innere des Gehäuses des Drucksensors.Im Betrieb tritt in Abhängigkeit von der Tauchtiefe eine Druckdifferenz zwischen dem Druck des Mediums und dem Druck im Innern des Gehäuses auf. Zum Schutz des Drucksensors soll die Kabeldurchführung auch bei großen Tauchtiefen kein Medium durchlassen, also druckdicht sein. Obwohl vorstehend und auch bei der folgenden Beschreibung eines Ausführungsbeispiels die Anwendung der druckdichten Kabeldurchführung bei einem Drucksensor erläutert wird, ist eine solche druckdichte Kabeldurchführung auch in zahlreichen anderen Fällen anwendbar.

Durch das Dokument FR-A-2519814 ist eine druckdichte Kabeldurchführung bekannt, die versehen ist mit einem verformbaren, ringförmigen Dichtkörper, der den Mantel des Kabels umschließt und in Axialrichtung des Kabels und der Bohrung sowie radial nach außen an Sitzflächen abgestützt ist, und mit einem Spannelement, das den Dichtkörper gegen seine Sitzflächen vorspannt und dadurch radial nach innen in dichtende Anlage am Mantel drückt.

Bei dieser bekannten Kabeldurchführung ist eine Stopfbuchsendichtung vorgesehen, die im wesentlichen das Spannelement und den ringförmigen Dichtkörper umfaßt. Das Spannelement steht in Eingriff mit dem Wandbauteil und drückt den Dichtkörper radial von außen gegen den Mantel des Kabels, um dadurch die Dichtwirkung hervorzurufen. Die erzielte Dichtheit läßt jedoch im Laufe der Zeit nach. Ferner ist im Zusammenhang mit dieser bekannten Kabeldurchführung eine Klemmhülse bekannt, die druckdicht mit dem Wandbauteil verbunden ist. Die Klemmhülse ist auf einer bestimmten axialen Erstrekkung auf den Mantel des Kabels gequetscht, um dadurch für Abdichtung zwischen dem Mantel und der Klemmhülse zu sorgen. Auch diese Dichtung weist den Nachteil auf, daß sie im Laufe der Zeit an Dichtwirkung verliert. Schließlich ist es im Zusammenhang mit der bekannten Kabeldurchführung bekannt, daß sich die Klemmhülse über das Ende des Mantels des Kabels hinaus erstreckt und mittels einer feuchtigkeitsbeständigen Vergußmasse ausgegossen ist. Die Dichtheit ist dabei von der Haftung der Vergußmasse an der Innenwand der Klemmhülse und am Mantel des Kabels abhängig und kann nicht immer gewährleistet werden.

Ferner ist es bei druckdichten Kabeldurchführungen bekannt, den Mantel des Kabels mit der Wand der Bohrung des Wandbauteils oder einer in das Wandbauteil eingesetzten Klemmhülse durch Kleben oder Vulkanisieren zu verbinden. Die Dichtwirkung einer solchen Verbindung ist stark abhängig von der stofflichen Zusammensetzung des Mantels des Kabels.

Eine druckdichte Kabeldurchführung mit den Merkmalen des Oberbegriffs von Anspruch 1 ist bekannt durch das Dokument FR-A- 2519814. Bei dieser bekannten Kabeldurchführung ist der Mantel des Kabels innen durch die Hülse starr abgestützt, so daß die radial nach innen gerichteten, vom Dichtkörper ausgeübten Kräfte den Mantel nicht radial nach innen drücken und dadurch den Mantelkern verformen können. Zu einer Einschnürung des Kabels aufgrund plastischer Verformung des Kabelkerns und somit zu einem Verlust der Vorspannkraft kommt es daher auch nach längerer Zeit nicht. Die Dichtheit und ihre Beständigkeit sind somit unabhängig vom inneren Kabelaufbau, das heißt vom Aufbau des Kabelkerns. Anders als beim Kleben, Vulkanisieren und Vergießen hängen die Dichtheit und ihre Dauerhaftigkeit nicht vom Werkstoff des Mantels des Kabels ab.

Der Erfindung liegt die Aufgabe zugrunde, die gattungsgemäße Vorrichtung dahingehend weiterzubilden, daß die Dichtheit auch nach längerer Zeit weiter verbessert ist.

Diese Aufgabe wird erfindungsgemäß durch die Kabeldurchführung gemäß Patentanspruch 1 gelöst, das heißt im wesentlichen dadurch, daß eine Klemmhülse vorgesehen ist, die mit dem Wandbauteil fest verbunden ist, wobei das Kabel durch die Klemmhülse verläuft und in diese eingeklemmt ist, und daß die starre Hülse bezüglich der Klemmhülse derart angeordnet ist, daß der Mantel zwischen einem Ende der starren Hülse und einem Ende der Klemmhülse eingeklemmt ist. Auf diese Weise wird einerseits für eine Zugentlastung des Kabels und andererseits für eine Vordichtung gesorgt.

In vorteilhafter Ausbildung der Erfindung kann vorgesehen sein, daß die starre Hülse aus einem metallischen Werkstoff besteht. Dies ermöglicht es, sie bei ausreichender Festigkeit und Steifigkeit mit vergleichsweise geringer Wandstärke auszubilden. Vorzugsweise hat die Hülse eine Länge, die ungefähr das 1- bis 5-fache ihres Außendurchmessers beträgt. Um das Einführen der starren Hülse zwischen dem Kabelkern und dem Mantel des Kabels zu erleichtern, ist sie vorzugsweise an ihrem Einführende konisch verjüngt.

Vorzugsweise ist das Spannelement als Hohlschraube ausgebildet, die auf der vom Medium abgewandten Seite des Wandbauteils in dieses geschraubt ist und mit einer auf ihrer Stirnseite ausgebildeten, ringförmigen Druckfläche gegen den ringförmigen Dichtkörper drückt. Dieser ist vorzugsweise ein homogener Dichtring mit einer langgestreckten Querschnittsfläche in Form eines Ovals oder ungefähr eines Rechtecks, wobei die größere Abmessung dieser Querschnittsfläche in Axialrichtung des Kabels verläuft.

Weitere vorteilhafte Merkmale der Erfindung sind in den Unteransprüchen gekennzeichnet und ergeben sich aus der Beschreibung eines Ausführungsbeispiels der Erfindung, das in der Zeichnung dargestellt ist und im folgenden näher erläutert wird. Es zeigen:
- Figur 1: schematisch, teilweise im Schnitt, einen Drucksensor, bei dem ein Ausführungsbeispiel der erfindungsgemäßen Kabeldurchführung angewendet ist;
- Figur 2: die Kabeldurchführung des Drucksensors gemäß Figur 1 in vergrößertem Maßstab; und
- Figur 3: eine starre Hülse der Kabeldurchführung.

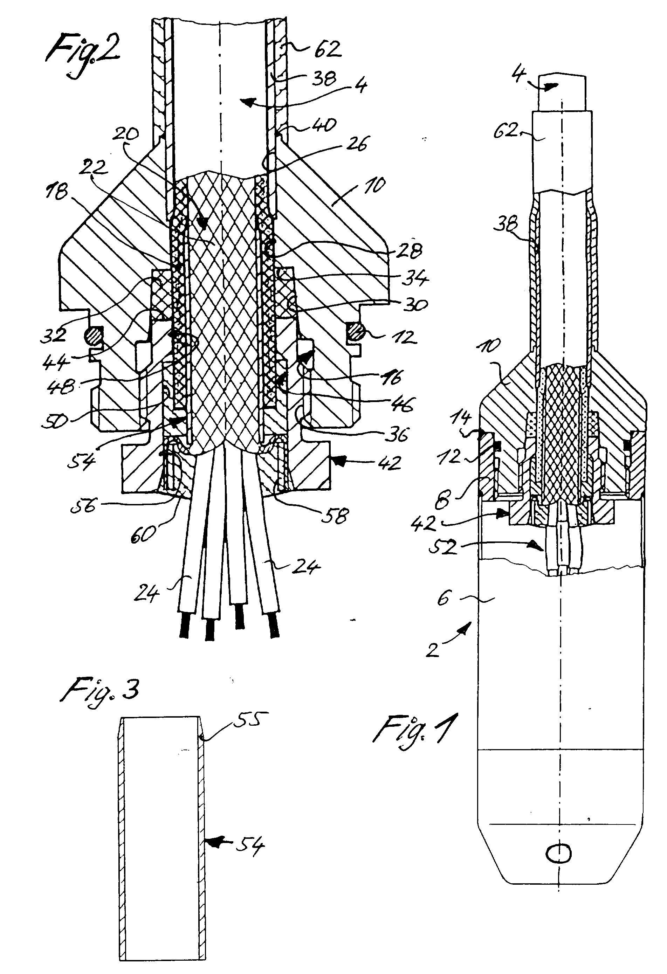

Figur 1 zeigt einen Drucksensor 2, wie er als Füllstands- oder Pegel sonde zur Messung von Flüssigkeitsfüllständen einsetzbar ist. Im Betrieb ist der Drucksensor 2 in das Medium, dessen Füllstand gemessen werden soll, eingetaucht. Der Drucksensor ist fest mit einem Kabel 4 verbunden, dessen in den Figuren 1 und 2 unteres Ende abgedichtet in den Drucksensor 2 hinein verläuft. Das Kabel 4 ist somit auf seiner Außenseite im Betrieb ebenfalls dem Medium ausgesetzt. Durch das Kabel 4 hindurch erfolgt die Energieversorgung des Drucksensors 2 und werden die Meßsignale abgeleitet. Außerdem hält das Kabel 4 den Drucksensor 2 in der gewünschten Tauchtiefe. Auf die Ausbildung der druckempfindlichen Elemente des Drucksensors 2 kommt es für die vorliegende Erläuterung nicht an. Diese druckempfindlichen Elemente befinden sich im in Figur 1 unteren Abschnitt des Drucksensors 2, sind jedoch nicht dargestellt und werden hier nicht beschrieben.

Der Drucksensor 2 weist ein äußeres Gehäuse auf, das einen zylindrischen Gehäusemantel 6 umfaßt. Am in Figur 1 oberen Ende ist der Gehäusemantel 6 verschweißt mit einem Gehäusering 8. In den Gehäusering 8 ist ein Wandbauteil 10 in Form einer Verschlußkappe eingeschraubt. Zwischen dem Gehäusering 8 und dem Wandbauteil 10 dichtet ein O-Ring 12 ab. Ein Schweißpunkt 14 sorgt für eine Verdrehsicherung zwischen dem Gehäusering 8 und dem Wandbauteil 10.

Das Wandbauteil 10 weist eine mittige Bohrung 16 auf, durch die das sensorseitige Ende des Kabels 4 verläuft. Das Kabel 4 weist einen Mantel 18 auf, der aus einem flexiblen, elastischen Werkstoff, üblicherweise einem Kunststoff, besteht. Der Mantel 18 umgibt einen Kabelkern 20, der beim dargestellten Ausführungsbeispiel auf seiner Außenseite eine schlauchartige, metallische Abschirmung 22 aufweist. Ferner gehören zum Kabelkern 20 von der Abschirmung 22 eingeschlossene Einzeladern 24 sowie ein nicht dargestellter Ausfüllmantel.

Die durch das Wandbauteil 10 verlaufende Bohrung 16 umfaßt mehrere Abschnitte. An einen in Figur 2 oben angeordneten ersten zylindrischen Abschnitt 26 schließt sich ein zweiter zylindrischer Abschnitt 28 mit etwas verringertem Durchmesser an. Zwischen diesen beiden Abschnitten ist eine schmale Schulter ausgebildet. Auf den zweiten Abschnitt 28 folgt nach unten in Figur 2 ein im Durchmesser erweiterter dritter Abschnitt 30, dessen sich leicht nach unten in Figur 2 konisch erweiternde Wand eine radiale Sitzfläche für einen verformbaren, ringförmigen Dichtkörper in Form eines Dichtringes 32 bildet. Eine Ringschulter zwischen dem zweiten Abschnitt 28 und dem dritten Abschnitt 30 der Bohrung 16 bildet eine axiale Sitzfläche 34 für den Dichtring 32. Auf den dritten Abschnitt 30 der Bohrung 16 folgt ein Gewindeabschnitt 36 mit einem Innengewinde, dessen Durchmesser nicht kleiner als der des dritten Abschnitts 30 ist.

In den ersten Abschnitt 26 der Bohrung 16 ist eine metallische Klemmhülse 38 derart eingesetzt, daß sie mit ihrem in Figur 2 unteren Ende auf der Schulter zwischen dem ersten Abschnitt 26 und dem zweiten Abschnitt 28 aufsitzt. Der Innendurchmesser der Klemmhülse 38 ist etwas kleiner als der des zweiten Abschnitts 28 und im wesentlichen gleich dem Außendurchmesser des Kabels 4. Die Klemmhülse 38 ist mittels einer Schweißnaht 40 gasdicht mit dem Wandbauteil 10 verschweißt und steht auf der in den Figuren oberen Seite des Wandbauteils 10, die im Betrieb des Drucksensors 2 dem Medium ausgesetzt ist, vom Wandbauteil 10 vor.

Der Dichtring 32 besteht homogen aus einem dauerelastischen Material und hat eine Querschnittsfläche in Form eines langgestreckten Ovals, wobei die größere Abmessung des Ovals nach dem Einsetzen des Dichtringes 32 in den dritten Abschnitt 30 der Bohrung 16 in Axialrichtung der Bohrung 16 verläuft.

Auf der von der Klemmhülse 38 abgewandten Seite des Wandbauteils 10 ist in den Gewindeabschnitt 36 der Bohrung 16 eine Hohlschraube 42 eingeschraubt, die als Spannelement zum Spannen des Dichtringes 32 dient. Die Hohlschraube 42 weist auf ihrer in den Figuren oben liegenden Stirnseite eine ebene, ringförmige Druckfläche 44 auf und ist mit einer mittigen, glattwandigen Bohrung versehen, die im folgenden als Schraubenbohrung 46 bezeichnet wird. Die Schraubenbohrung 46 weist einen in Figur 2 oben liegenden, inneren Abschnitt 48 sowie einen sich daran nach unten in Figur 2 anschließenden äußeren Abschnitt 50 auf. Der innere Abschnitt 48 hat einen Durchmesser, der etwas größer als der Außendurchmesser des Mantels 18 des Kabels 4 ist. Der äußere Abschnitt 50 hat einen größeren Durchmesser als der innere Abschnitt 48.

Das sensorseitige Ende des Kabels 4 verläuft von der Außen- bzw. Mediumseite durch die Klemmhülse 38, den zweiten Abschnitt 28 und dritten Abschnitt 30 der Bohrung 16 und den inneren Abschnitt 48 der Schraubenbohrung 46 bis in den äußeren Abschnitt 50 der Schraubenbohrung 46. Im Bereich des äußeren Abschnitts 50 endet der Mantel 18 des Kabels; der Mantel ist dort abgeschnitten, wie dies Figur 2 erkennen läßt. Als Elemente des Kabelkerns 20 verlaufen die Einzeladern 24 vollständig auch durch den äußeren Abschnitt 50 der Schraubenbohrung 46 hindurch, so daß sie aus der Hohlschraube 42 vorstehen und an elektrische Leiter des Drucksensors anschließbar sind, wie dies durch Verbindungen 52 in Figur 1 angedeutet ist.

In das Ende des Kabels 4 ist eine starre Hülse 54 eingesetzt, die für sich in Figur 3 gezeigt ist. Diese starre, zylindrische Hülse besteht aus einem metallischen Werkstoff und ist an ihrem in den Figuren 2 und 3 oberen Ende 55 auf ihrer Außenseite konische verjüngt ausgebildet. Die Länge der Hülse beträgt ungefähr das Dreifache ihres Außendurchmessers. Die Hülse 54 ist angeordnet zwischen dem Mantel 18 des Kabels 4 und dessen Kabelkern 20, das heißt zwischen dem Mantel 18 und der Abschirmung 22. Die Hülse 54 ist so weit in das Ende des Kabels eingeschoben, daß sie zumindest im Bereich des dritten Abschnitts 30 der Bohrung 16 und somit im Bereich des Dichtringes 32 vorhanden ist. Vorzugsweise ist die Hülse 54 so weit eingeschoben, daß ihr verjüngtes Ende 55 sich im Bereich der Schulter zwischen dem ersten Abschnitt 26 und dem zweiten Abschnitt 28 der Bohrung 16 und somit im Bereich des in Figur 2 unteren, radial nach innen vorspringenden Endes der Klemmhülse 38 befindet, wie dies in Figur 2 dargestellt ist. Nach unten in Figur 2 ragt die Hülse 54 über das Ende des Mantels 18 hinaus und in den äußeren Abschnitt 50 der Schraubenbohrung 46 hinein.

Dort, wo die Abschirmung 22 aus dem unteren Ende der Hülse 54 austritt, ist sie derart aufgeweitet, daß sie an der Bohrungswand 56 des äußeren Abschnitts 50 der Schraubenbohrung 46 anliegt, wie dies in Figur 2 gezeigt ist. In diesen aufgeweiteten Abschnitt der Abschirmung 22 ist ein Ring 58 eingedrückt, der die Abschirmung 22 in der genannten Anlage hält. Die nicht von der Hülse 54 und Elementen des Kabels 4 eingenommenen Räume des äußeren Abschnitts 50 der Schraubenbohrung 46 sind mit einer Vergußmasse 60 ausgegossen.

Die Montage der in vorstehend beschriebener Weise ausgebildeten Kabeldurchführung wird im folgenden erläutert.

Auf das Ende des Kabels 4 wird zunächst ein (noch ungeschrumpfter) Schrumpfschlauch 62 aufgeschoben, wonach das Ende des Kabels von oben in Figur 2 durch die Klemmhülse 38 so weit nach unten geschoben wird, daß das Kabel unten aus dem Wandbauteil 10 vorsteht, in das die Hohlschraube 42 noch nicht eingeschraubt ist. Vorzugsweise erst dann werden der Mantel 18, die Abschirmung 22 und die Einzeladern 24 auf die benötigten Längen abgelängt und wird gegebenenfalls Material des nicht dargestellten Ausfüllmantels entfernt.

Nach dem Ablängen der Elemente des Kabels wird die Hülse 54 mit ihrem verjüngten Ende 55 voran von unten in Figur 2 auf den Kabelkern 20 und zwischen die Abschirmung 22 sowie den Mantel 18 geschoben, bis die Hülse 54 nur noch etwas aus dem Mantel 18 vorsteht und die in Figur 2 gezeigte Relativlage bezüglich des Mantels 18 einnimmt. Im Anschluß daran wird dann das Kabel 4 nach oben in Figur 2 gezogen, bis die Hülse 54 bezüglich des Wandbauteils 10 und bezüglich der Klemmhülse 38 die in Figur 2 dargestellte Stellung einnimmt, in der der Mantel 18 zwischen dem verjüngten Ende 55 der Hülse 54 und dem radial nach innen vorstehenden unteren Ende der Klemmhülse 38 eingeklemmt ist. Dadurch wird eine Dichtstelle zwischen dem Mantel 18 und dem unteren Ende der Klemmhülse 38 gebildet.

Nachdem auf vorstehend angegebene Weise das Ende des Kabels 4 bezüglich des Wandbauteils 10 in seine Sollage gebracht worden ist, wird die Klemmhülse 38 an das Kabel 4 geklemmt bzw. gequetscht. Dadurch wird eine Zugentlastung für das Kabel 4 geschaffen. Außerdem bewirkt dies eine Vordichtung zwischen der Klemmhülse 38 und dem Kabel 4. Nachfolgend wird der Dichtring 32 in den dritten Abschnitt 30 eingesetzt und wird die Hohlschraube 42 über das Kabelende geschoben und in den Gewindeabschnitt 36 des Wandbauteils 10 geschraubt. Dabei gelangt die Druckfläche 44 der Hohlschraube 42 in Berührung mit dem Dichtring 32. Beim weiteren Einschrauben der Hohlschraube 42 wird der Dichtring 32 gegen die Sitzfläche 34 und die von der Wand des dritten Abschnitts 30 gebildete weitere Sitzfläche gepreßt. Dies ist begleitet von einem Anpressen des Dichtringes 32 gegen den Mantel 18 des Kabels 4. Dabei kann sich der Mantel 18 zwar begrenzt verformen; er kann jedoch aufgrund der den Mantel 18 radial innen abstützenden, starren Hülse 54 nicht nach innen ausweichen. Der Dichtring 32 wird somit mit dem erforderlichen Druck gegen seine Sitzflächen sowie gegen den Mantel 18 gepreßt, so daß der Dichtring 32 sowohl am Wandbauteil 10 als auch am Mantel 18 für Dichtheit sorgt. Der Langzeitverlust der Dichtheit ist dabei äußerst gering, da der vom Dichtring 32 ausgeübte Druck nicht zu einer allmählichen, dauerhaften Verformung des Kabelkerns 20 führen kann, weil die Druckkräfte des Dichtringes 32 von der starren Hülse 54 aufgenommen werden.

Nachdem die Hohlschraube 42 im erforderlichen Ausmaß in das Wandbauteil 10 eingeschraubt worden ist und gesichert worden ist, wird der freie Raum des äußeren Abschnitts 50 der Schraubenbohrung 46 zunächst so weit mit Vergußmasse aufgefüllt, daß das freie Ende der Hülse 54 noch aus der Vergußmasse vorsteht. Im Anschluß daran wird die Abschirmung 32 aufgeweitet, bis sie an der Bohrungswand 56 anliegt, und wird der Ring 58 eingesetzt. Schließlich wird dann auch der freie Raum innerhalb des Ringes 58 mit der Vergußmasse 60 aufgefüllt. Abschließend wird der Schrumpfschlauch 62 geschrumpft.

Wenn die druckdichte Kabeldurchführung auf vorstehend erläuterte Weise montiert ist, können die Verbindungen 52 hergestellt werden, wonach das Wandbauteil 10 in den Gehäusering 8 des Gehäuses des Drucksensors 2 geschraubt wird und schließlich das Gehäuse durch den Schweißpunkt 14 gegen Verdrehung gesichert wird.

Wie sich aus der vorstehenden Beschreibung ergibt, gewährleistet die Kabeldurchführung dauerhaft Dichtheit.

Die hohe, dauerhafte Dichtheit ist unabhängig vom Werkstoff des Mantels 18 des Kabels und vom inneren Aufbau des Kabelkerns 20.

Vorstehend ist anhand der Figuren 1 bis 3 ein bevorzugtes Ausführungsbeispiel der Erfindung erläutert. Die Erfindung ist jedoch nicht auf dieses Ausführungsbeispiel beschränkt. Vielmehr sind zahlreiche Abwandlungen der beschriebenen Ausführungsform sowie andere Realisierungen der Erfindung möglich. Abweichend vom beschriebenen Ausführungsbeispiel kann beispielsweise die Hohlschraube 42 auf der dem Medium bzw. der Flüssigkeit zugewandten Seite des Wandbauteils 10 angeordnet sein. In diesem Fall würde dann das Kabel 40 von unten in Figur 2 in die Hohlschraube 42 einlaufen und würden die Einzeladern 24 erst oberhalb (in Figur 2) des Wandbauteils 10 freiliegen. Ferner ist beim dargestellten Ausführungsbeispiel die Klemmhülse 38 unmittelbar am Wandbauteil 10 befestigt. Auch dies ist nicht notwendig. Vielmehr kann die Klemmhülse auch unmittelbar an der Hohlschraube 42 befestigt sein.

## Patentansprüche

1. Vorrichtung zum abgedichteten Durchführen eines Endes eines Kabels (4), das einen Mantel (18) und einen vom Mantel umgebenen Kabelkern (20) aufweist, durch eine Bohrung (16) in einem Wandbauteil (10), mit einem verformbaren, ringförmigen Dichtkörper (32), der den Mantel (18) umschließt und in Axialrichtung des Kabels (4) und der Bohrung (16) sowie radial nach außen an Sitzflächen (34) abgestützt ist, mit einem Spannelement (42), das den Dichtkörper (32) gegen seine Sitzflächen (34) vorspannt und dadurch radial nach innen in dichtende Anlage am Mantel (18) drückt, und mit einer im Bereich des Dichtkörpers (32) zwischen dem Mantel (18) und dem Kabelkern (20) eingesetzten, starren Hülse (54),
**gekennzeichnet durch**
eine Klemmhülse (38), die mit dem Wandbauteil (10) fest verbunden ist, wobei das Kabel (4) durch die Klemmhülse (38) verläuft und in diese eingeklemmt ist,
und wobei die starre Hülse (54) bezüglich der Klemmhülse (38) derart angeordnet ist, daß der Mantel (18) zwischen einem Ende der starren Hülse (54) und einem Ende der Klemmhülse (38) eingeklemmt ist.

2. Vorrichtung nach Anspruch 1, **dadurch gekennzeichnet**, daß die starre Hülse (54) aus einem metallischen Werkstoff besteht.

3. Vorrichtung nach Anspruch 1 oder 2, **dadurch gekennzeichnet**, daß die Hülse (54) an demjenigen Ende (55), mit dem sie während des Einsetzens in das Kabel (4) zuerst zwischen den Mantel (18) und den Kabelkern (20) eingeführt wird, konisch verjüngt ausgebildet ist.

4. Vorrichtung nach einem der Ansprüche 1 bis 3, **dadurch gekennzeichnet**, daß das Verhältnis von Länge der starren Hülse (54) zu deren Außendurchmesser im Bereich von 1 bis 5 liegt.

5. Vorrichtung nach einem der Ansprüche 1 bis 4, **dadurch gekennzeichnet**, daß der ringförmige Dichtkörper ein homogener Dichtring (32) ist.

6. Vorrichtung nach Anspruch 5, **dadurch gekennzeichnet,** daß der Dichtring (32) eine im wesentlichen rechteckige Querschnittsfläche hat, wobei deren größere Abmessung in Axialrichtung des Kabels (4) verläuft.

7. Vorrichtung nach einem der Ansprüche 1 bis 6, **dadurch gekennzeichnet,** daß das Spannelement eine Hohlschraube (42) ist, die an ihrer Stirnseite eine am Dichtkörper (32) anliegenden, ringförmige Druckfläche (44) aufweist und durch deren mittige Schraubenbohrung (46) zumindest Elemente des Kabelkerns (20) verlaufen.

8. Vorrichtung nach Anspruch 7, **dadurch gekennzeichnet,** daß die Hohlschraube (42) unmittelbar in das Wandbauteil (10) geschraubt ist.

9. Vorrichtung nach einem der Ansprüche 1 bis 8, **dadurch gekennzeichnet,** daß die Klemmhülse (38) unmittelbar am Wandbauteil (10) befestigt ist.

10. Vorrichtung nach Anspruch 9, **dadurch gekennzeichnet,** daß die Klemmhülse (38) mit dem Wandbauteil (10) verschweißt ist.

11. Vorrichtung nach Anspruch 9 oder 10 Verbindung mit Anspruch 7 oder 8, **dadurch gekennzeichnet,** daß die Klemmhülse (38) von der einen Seite des Wandbauteils (10) vorsteht, daß die Hohlschraube (42) auf der anderen Seite des Wandbauteils (10) angeordnet ist und daß der Mantel (18) sich durch die Klemmhülse (38) und den Dichtkörper (32) bis in die mittige Schraubenbohrung (46) der Hohlschraube (42) erstreckt und in dieser endet.

12. Vorrichtung nach Anspruch 11, **dadurch gekennzeichnet,** daß die durch den von der Druckfläche (44) abgewandten Abschnitt (50) der mittigen Schraubenbohrung (46) verlaufenden Elemente des Kabelkerns (20) in diesem Abschnitt (50) mittels einer Vergußmasse (60) vergossen sind.

13. Vorrichtung nach Anspruch 11 oder 12, wobei der Kabelkern (20) eine dem Mantel (18) benachbarte, schlauchartige Abschirmung (22) aufweist, **dadurch gekennzeichnet,** daß die Abschirmung (22) bis in Anlage an die Bohrungswand (56) der mittigen Schraubenbohrung (46) aufgeweitet ist und daß ein Ring (58) in die aufgeweitete Abschirmung (22) eingesetzt ist.

14. Vorrichtung nach einem der Ansprüche 1 bis 13, **dadurch gekennzeichnet,** daß das Wandbauteil (10) durch eine Verschlußkappe eines Gehäuses eines Drucksensors (2) gebildet ist.

## Claims

1. Device for the sealed feedthrough of an end of a cable (4), which has a sheath (18) and a cable core (20) surrounded by the sheath, through a bore (16) in a wall component (10), having a deformable, annular sealing body (32) which encloses the sheath (18) and is supported in the axial direction of the cable (4) and of the bore (16) as well as radially outwardly on bearing surfaces (34), having a tensioning element (42) which pretensions the sealing body (32) against its bearing surfaces (34) and thereby presses it radially inwards to bear in a sealing manner against the sheath (18), and having a rigid sleeve (54) which is inserted in the region of the sealing body (32) between the sheath (18) and the cable core (20), characterized by a clamping sleeve (38) which is permanently connected to the wall component (10), the cable (4) running through the clamping sleeve (38) and being clamped therein, and the rigid sleeve (54) being arranged in such a manner relative to the clamping sleeve (38) that the sheath (18) is clamped in between one end of the rigid sleeve (54) and one end of the clamping sleeve (38).

2. Device according to Claim 1, characterized in that the rigid sleeve (54) consists of a metallic material.

3. Device according to Claim 1 or 2, characterized in that the sleeve (54) is designed with a conical taper at that end (55) by which it is initially introduced between the sheath (18) and the cable core (20) during insertion into the cable (4).

4. Device according to one of Claims 1 to 3, characterized in that the ratio of the length of the rigid sleeve (54) to its external diameter is in the range of from 1 to 5.

5. Device according to one of Claims 1 to 4, characterized in that the annular sealing body is a homogeneous sealing ring (32).

6. Device according to Claim 5, characterized in that the sealing ring (32) has an essentially rectangular cross-sectional area, its larger dimension running in the axial direction of the cable (4).

7. Device according to one of Claims 1 to 6, characterized in that the tensioning element is a hollow screw (42), which has at its end an annular pressure surface (44) bearing against the sealing body (32) and has at least elements of the cable core (20) running through its central screw bore (46).

8. Device according to Claim 7, characterized in that the hollow screw (42) is screwed directly into the wall component (10).

9. Device according to one of Claims 1 to 8, characterized in that the clamping sleeve (38) is fixed directly to the wall component (10).

10. Device according to Claim 9, characterized in that the clamping sleeve (38) is welded to the wall component (10).

11. Device according to Claim 9 or 10 in conjunction with Claim 7 or 8, characterized in that the clamping sleeve (38) projects from one side of the wall component (10), in that the hollow screw (42) is arranged on the other side of the wall component (10), and in that the sheath (18) extends through the clamping sleeve (38) and the sealing body (32) right into the central screw bore (46) of the hollow screw (42), and ends in the latter.

12. Device according to Claim 11, characterized in that the elements of the cable core (20) which run through that section (50) of the central screw bore (46) which is remote from the pressure surface (44) are sealed in this section (50) by means of a sealing compound (60).

13. Device according to Claim 11 or 12, the cable core (20) having a hose-like screen (22) adjacent to the sheath (18), characterized in that the screen (22) is widened until it bears against the bore wall (56) of the central screw bore (46), and in that a ring (58) is inserted into the widened screen (22).

14. Device according to one of Claims 1 to 13, characterized in that the wall component (10) is formed by a closure cap of a housing of a pressure sensor (2).

## Revendications

1. Dispositif pour le passage étanche d'une extrémité d'un câble (4), qui présente une gaine (18) et une âme de câble (20) entourée par la gaine, à travers un perçage (16) pratiqué dans un élément de paroi (10), comprenant un élément d'étanchéité annulaire déformable (32), qui entoure la gaine (18) et s'appuie, dans la direction axiale du câble (4) et du perçage (16) ainsi que radialement vers l'extérieur, contre des surfaces d'appui (34), comprenant un élément de serrage (42), qui précontraint l'élément d'étanchéité (32) contre ses surfaces d'appui (34) et le presse ainsi, radialement vers l'intérieur, en application étanche contre la gaine (18), et comprenant un manchon rigide (54) inséré dans la région de l'élément d'étanchéité (32) entre la gaine (18) et l'âme (20) du câble,
**caractérisé** par un manchon de serrage (38) qui est fixement assemblé à l'élément de paroi (10), le câble (4) s'étendant à travers le manchon de serrage (38) et étant serré dans ce dernier, et le manchon rigide (54) étant disposé, par rapport au manchon de serrage (38), de telle sorte que la gaine (18) est serrée entre une extrémité du manchon rigide (54) et une extrémité du manchon de serrage (38).

2. Dispositif selon la revendication 1, **caractérisé** en ce que le manchon rigide (54) est réalisé en un matériau métallique.

3. Dispositif selon la revendication 1 ou 2, **caractérisé** en ce que le manchon (54) est réalisé avec un rétrécissement conique à son extrémité (55) par laquelle il est d'abord introduit entre la gaine (18) et l'âme (20) du câble lors de son insertion dans le câble (4).

4. Dispositif selon l'une quelconque des revendications 1 à 3, **caractérisé** en ce que le rapport de la longueur du manchon rigide (54) à son diamètre extérieur se situe entre 1 et 5.

5. Dispositif selon l'une quelconque des revendications 1 à 4, **caractérisé** en ce que l'élément d'étanchéité annulaire est une bague d'étanchéité homogène (32).

6. Dispositif selon la revendication 5, **caractérisé** en ce que la bague d'étanchéité (32) possède une aire de section sensiblement rectangulaire, dont la plus grande dimension s'étend dans la direction axiale du câble (4).

7. Dispositif selon l'une quelconque des revendications 1 à 6, **caractérisé** en ce que l'élément de serrage est une vis creuse (42), qui présente sur son côté frontal une face de pression annulaire (44) s'appliquant contre l'élément d'étanchéité (32), et à travers le perçage central (46) de laquelle s'étendent au moins des éléments de l'âme (20) du câble.

8. Dispositif selon la revendication 7, **caractérisé** en ce que la vis creuse (42) est directement vissée dans l'élément de paroi (10).

9. Dispositif selon l'une quelconque des revendications 1 à 8, **caractérisé** en ce que le manchon de serrage (38) est directement fixé à l'élément de paroi (10).

10. Dispositif selon la revendication 9, **caractérisé** en ce que le manchon de serrage (38) est assemblé à l'élément de paroi (10) par soudage.

11. Dispositif selon la revendication 9 ou 10 conjointement avec la revendication 7 ou 8, **caractérisé** en ce que le manchon de serrage (38) dépasse d'un côté de l'élément de paroi (10), en ce que la vis creuse (42) est disposée de l'autre côté de l'élément de paroi (10), et en ce que la gaine (18) s'étend, à travers le manchon de serrage (38) et l'élément d'étanchéité (32), jusque dans le perçage central (46) de la vis creuse (42) et s'y termine.

12. Dispositif selon la revendication 11, **caractérisé** en ce que les éléments de l'âme (20) du câble qui s'étendent à travers le tronçon (50) du perçage de vis central (46) qui est opposé à la face de pression (44) sont scellés dans ce tronçon (50) au moyen d'une masse de scellement (60).

13. Dispositif selon la revendication 11 ou 12, l'âme (20) du câble présentant un blindage tubulaire (22) voisin de la gaine (18), **caractérisé** en ce que le blindage (22) est élargi jusqu'à venir en application contre la paroi (56) du perçage de vis central (46), et en ce qu'une bague (58) est insérée dans le blindage élargi (22).

14. Dispositif selon l'une quelconque des revendications 1 à 13, **caractérisé** en ce que l'élément de paroi (10) est formé par un capot de fermeture d'un boîtier d'un capteur de pression (2).
